# EUROPEAN PATENT APPLICATION

(11) **EP 4 822 044 A1**
(43) Date of publication of application: **14.10.2026**
(21) Application number: 26166469.2
(22) Date of filing: 20.03.2026
(51) Int. Cl.: C22B 7/00, C22B 3/00, C22B 47/00, H01M 10/54

(54) **METHOD FOR RECOVERING METALS**

(30) Priority: 09.04.2025 JP 2025064485
(71) Applicant: Prime Planet Energy & Solutions, Inc., Chuo-ku, Tokyo 103-0022 (JP); The University of Tokyo, Bunkyo-ku, Tokyo 113-8654 (JP)
(72) Inventor: SUZUKI, Shinya, Tokyo 103-0022 (JP); OUCHI, Takanari, Tokyo 113-8654 (JP)
(74) Representative: Kuhnen & Wacker Patent- und Rechtsanwaltsbüro PartG mbB

(57) **Abstract**

A method capable of recovering Co and Mn at a high recovery rate from an object containing Ni, Co, and Mn using ammonia and ammonium carbonate is provided. The method for recovering metals of the present disclosure includes an Mn leaching step of performing leaching on an object containing Ni, Co, and Mn using a first ammonia aqueous solution containing ammonia and ammonium carbonate to leach Mn into a first aqueous phase, and a Ni, Co leaching step of performing leaching on the solid residue obtained in the Mn leaching step using a second ammonia aqueous solution containing ammonia and ammonium carbonate to leach Ni and Co into a second aqueous phase. The amount of dissolved oxygen in the first ammonia aqueous solution in the leaching in the Mn leaching step is less than the amount of dissolved oxygen in the second ammonia aqueous solution in the leaching in the Ni, Co leaching step.

## Description

### BACKGROUND OF THE DISCLOSURE

### 1. Field

The present disclosure relates to a method for recovering metals.

### 2. Background

Lithium-ion secondary batteries are widely used in various fields as vehicle driving power sources, portable power sources, and the like. In recent years, from the viewpoint of SDGs, material recycling of used lithium-ion secondary batteries has been progressing. In lithium-ion secondary batteries, various metal elements are used, and for material recycling, technologies for separating metal elements contained in used lithium-ion secondary batteries are being developed.

Representative examples of positive electrode active materials of lithium-ion secondary batteries that have been put to practical use in vehicle-mounted applications include lithium nickel cobalt manganese-based composite oxides (NCM), and these contain Ni, Co, and Mn. Therefore, waste of lithium-ion secondary batteries using these positive electrode active materials contains Ni, Co, and Mn. In Non-Patent Document 1, Ni and Co are selectively separated from Ni, Co, Mn, and Al contained in positive electrode waste of used lithium-ion secondary batteries by ammonia leaching.

### [Prior Art Documents]

### [Non-Patent Documents]

[Non-Patent Document 1] Waste Management, February 2017, vol. 60, p. 680-688

### SUMMARY

In ammonia leaching, a pH adjuster is used to selectively leach specific metals. As a result of intensive studies by the present inventors, the following has been found. In ammonia leaching of an object containing Ni, Co, and Mn, when ammonium carbonate is used as a pH adjuster, unlike when other pH adjusters (e.g., ammonium sulfate used in Non-Patent Document 1) are used, after Co dissolves into the aqueous phase, a part of Co precipitates as a poorly soluble compound together with Mn. As a result, there is a problem that the recovery rate of Co decreases.

Therefore, an object of the present disclosure is to provide a method capable of recovering Co and Mn at a high recovery rate from an object containing Ni, Co, and Mn using ammonia and ammonium carbonate.

The method for recovering metals of the present disclosure includes an Mn leaching step of performing leaching on an object containing Ni, Co, and Mn using a first ammonia aqueous solution containing ammonia and ammonium carbonate to leach Mn into a first aqueous phase, and a Ni, Co leaching step of performing leaching on a solid residue obtained in the Mn leaching step using a second ammonia aqueous solution containing ammonia and ammonium carbonate to leach Ni and Co into a second aqueous phase. The amount of dissolved oxygen in the first ammonia aqueous solution in the leaching in the Mn leaching step is less than the amount of dissolved oxygen in the second ammonia aqueous solution in the leaching in the Ni, Co leaching step.

According to such a configuration, Co and Mn can be recovered at a high recovery rate from an object containing Ni, Co, and Mn using ammonia and ammonium carbonate.

### BRIEF DESCRIPTION OF THE DRAWINGS

FIG. 1 is a flowchart showing an outline of the method for recovering metals according to the present disclosure and each step;
FIG. 2 is a vertical cross-sectional view schematically showing the internal structure of an example of a lithium-ion secondary battery;
FIG. 3 is a schematic exploded view showing the configuration of the electrode body of the lithium-ion secondary battery shown in FIG. 2; and
FIG. 4 is a schematic cross-sectional view of the positive electrode of the lithium-ion secondary battery shown in FIG. 2.

### DETAILED DESCRIPTION OF THE PREFERRED EMBODIMENTS

Hereinafter, embodiments according to the present disclosure will be described with reference to the drawings. It should be noted that matters not mentioned in the present specification but necessary for carrying out the present disclosure can be grasped as design matters of a person skilled in the art based on the prior art in the relevant field. The present disclosure can be carried out based on the content disclosed in the present specification and technical common knowledge in the relevant field. In the following drawings, the same reference numerals are assigned to members and portions having the same functions for explanation. Further, dimensional relationships (length, width, thickness, etc.) in each drawing do not reflect actual dimensional relationships. It should be noted that in the present specification, a numerical range expressed as "A to B" includes A and B.

It should be noted that in the present specification, "secondary battery" refers to a power storage device capable of repeated charging and discharging. Further, in the present specification, "lithium-ion secondary battery" refers to a secondary battery that uses lithium ions as charge carriers and achieves charging and discharging by the transfer of charges accompanying lithium ions between positive and negative electrodes.

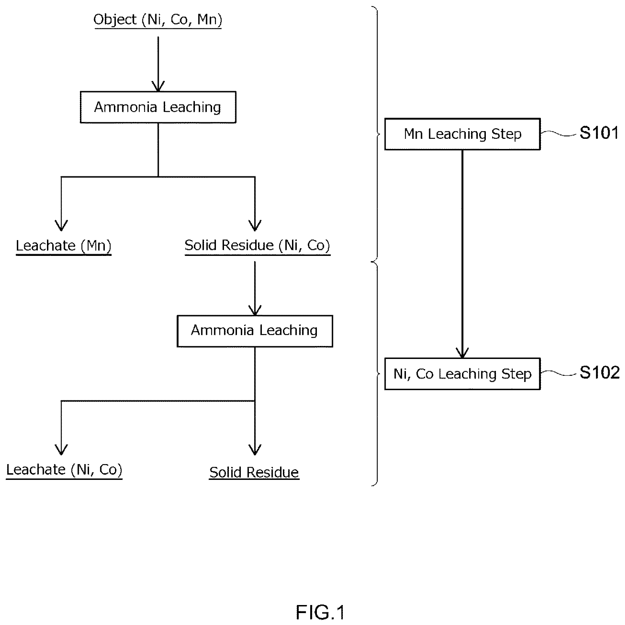

FIG. 1 is a flowchart showing an outline of the method for recovering metals of the present disclosure and each step. The method for recovering metals of the present disclosure includes an Mn leaching step S101 of performing leaching on an object containing Ni, Co, and Mn using a first ammonia aqueous solution containing ammonia and ammonium carbonate to leach Mn into a first aqueous phase, and a Ni, Co leaching step S102 of performing leaching on a solid residue obtained in the Mn leaching step using a second ammonia aqueous solution containing ammonia and ammonium carbonate to leach Ni and Co into a second aqueous phase. The amount of dissolved oxygen in the first ammonia aqueous solution in the leaching in the Mn leaching step S101 is less than the amount of dissolved oxygen in the second ammonia aqueous solution in the leaching in the Ni, Co leaching step S102.

The method for recovering metals of the present disclosure is performed on an object containing Ni, Co, and Mn. The type of this object is not particularly limited as long as it contains Ni, Co, and Mn, and examples include minerals containing Ni, Co, and Mn, battery waste containing Ni, Co, and Mn, and waste other than batteries containing Ni, Co, and Mn. The object containing Ni, Co, and Mn is desirably battery waste, more desirably waste of secondary batteries, and particularly desirably waste of lithium-ion secondary batteries. Therefore, first, lithium-ion secondary batteries will be specifically described.

### <Lithium-Ion Secondary Battery>

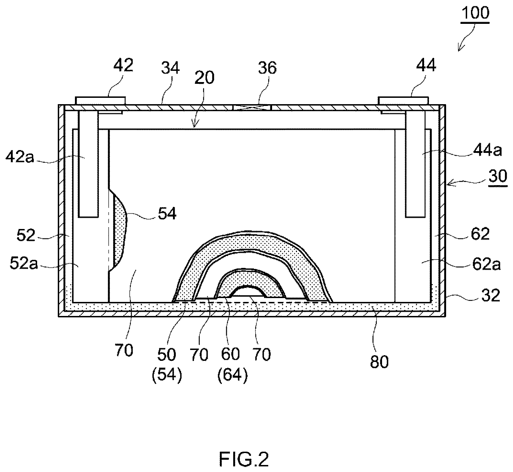

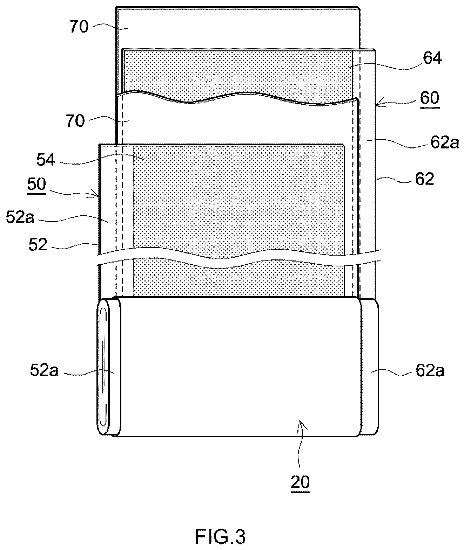

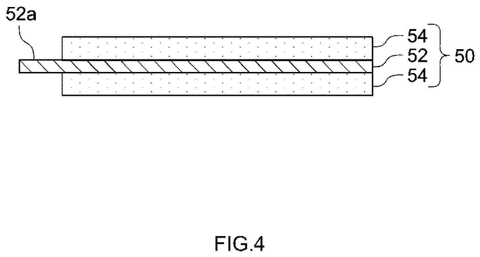

A general configuration of a lithium-ion secondary battery will be described with examples. An example of a general structure of a lithium-ion secondary battery is shown in FIGS. 2 and 3. FIG. 2 is a vertical cross-sectional view schematically showing the internal structure of an example of a lithium-ion secondary battery. FIG. 3 is a schematic exploded view showing the electrode body of the lithium-ion secondary battery shown in FIG. 2. FIG. 4 is a schematic cross-sectional view along the thickness direction of the positive electrode of the lithium-ion secondary battery shown in FIG. 2. It should be noted that the following description of the lithium-ion secondary battery is for convenience of understanding and does not limit the method for recovering metals of the present disclosure in any way.

As shown in FIG. 2, a lithium-ion secondary battery 100 is a sealed battery in which a flat-shaped electrode body 20 and a non-aqueous electrolyte (not shown) are housed inside a battery case 30. As shown in FIG. 2, the battery case 30 is composed of an exterior body 32 that houses the electrode body 20, and a lid 34 that seals an opening of the exterior body 32. The exterior body 32 and the lid 34 are welded and sealed by laser welding or the like. As the material of the battery case 30, for example, aluminum, aluminum alloy, resin, or the like is used.

In the illustrated example, the battery case 30 has a prismatic shape. However, the shape of the battery case 30 is not limited to this, and may be, for example, a cylindrical shape. Alternatively, the battery case 30 may be a laminate case having a gas barrier layer such as an aluminum layer and a sealant layer containing a thermoplastic resin.

The battery case 30 includes a positive electrode terminal 42 and a negative electrode terminal 44 for external connection. Further, the battery case 30 is provided with a safety valve 36 set to release the internal pressure when the internal pressure of the battery case 30 rises to a predetermined level or higher. The battery case 30 is provided with an injection port (not shown) for injecting the non-aqueous electrolyte. The positive electrode terminal 42 is electrically connected to a positive electrode current collecting plate 42a. The negative electrode terminal 44 is electrically connected to a negative electrode current collecting plate 44a.

As shown in FIGS. 2 and 3, the electrode body 20 has a form in which an elongated positive electrode sheet 50 and an elongated negative electrode sheet 60 are superposed with two elongated separator sheets 70 interposed therebetween and wound in the longitudinal direction. Therefore, in the present embodiment, the electrode body 20 is a wound electrode body. However, the electrode body 20 is not limited to this, and may be a stacked-type electrode body in which a plurality of positive electrodes and a plurality of negative electrodes are alternately stacked with separators interposed therebetween.

As shown in FIGS. 2 and 4, in the positive electrode sheet 50, a positive electrode active material layer 54 is formed on one side or both sides (here, both sides) of a positive electrode current collector 52 along the longitudinal direction. The positive electrode sheet 50 has a positive electrode active material layer non-formed portion 52a, which is a portion where the positive electrode active material layer 54 is not formed and the positive electrode current collector 52 is exposed. The positive electrode current collecting plate 42a is joined to the positive electrode active material layer non-formed portion 52a.

An example of the positive electrode current collector 52 constituting the positive electrode sheet 50 includes aluminum foil and the like. The positive electrode active material layer 54 contains a positive electrode active material. Typically, a lithium nickel cobalt manganese-based composite oxide is used as the positive electrode active material. The positive electrode active material layer 54 may contain a conductive material (e.g., carbon black, carbon nanotube, etc.), a binder (e.g., polyvinylidene fluoride, etc.), and the like.

The content of the positive electrode active material in the positive electrode active material layer 54 is desirably 70% by mass or more, and more desirably 85% by mass or more and 99% by mass or less. The content of the conductive material in the positive electrode active material layer 54 is desirably 0.1% by mass or more and 20% by mass or less, and more desirably 0.3% by mass or more and 15% by mass or less. The content of the binder in the positive electrode active material layer 54 is desirably 0.4% by mass or more and 15% by mass or less, and more desirably 0.5% by mass or more and 10% by mass or less.

As shown in FIG. 3, in the negative electrode sheet 60, a negative electrode active material layer 64 is formed on one side or both sides (here, both sides) of a negative electrode current collector 62 along the longitudinal direction. The negative electrode sheet 60 has a negative electrode active material layer non-formed portion 62a, which is a portion where the negative electrode active material layer 64 is not formed and the negative electrode current collector 62 is exposed. The negative electrode current collecting plate 44a is joined to the negative electrode active material layer non-formed portion 62a.

An example of the negative electrode current collector 62 constituting the negative electrode sheet 60 includes copper foil. The negative electrode active material layer 64 contains a negative electrode active material. Examples of the negative electrode active material include carbon-based negative electrode active materials (e.g., graphite, hard carbon, soft carbon, etc.), silicon-based negative electrode active materials (e.g., silicon, silicon oxide, etc.), and the like. The negative electrode active material layer 64 may contain a binder (e.g., styrene butadiene rubber (SBR), etc.), a thickener (e.g., carboxymethyl cellulose (CMC), etc.), and the like.

The content of graphite in the negative electrode active material layer 64 is desirably 90% by mass or more, and more desirably 95% by mass or more and 99% by mass or less. The content of the binder in the negative electrode active material layer 64 is desirably 0.1 % by mass or more and 8% by mass or less, and more desirably 0.5% by mass or more and 3% by mass or less. The content of the thickener in the negative electrode active material layer 64 is desirably 0.3% by mass or more and 3% by mass or less, and more desirably 0.5% by mass or more and 2% by mass or less.

Examples of the separator 70 include porous resin sheets such as polyethylene and polypropylene. The porous sheet may have a single-layer structure or a multi-layer structure. A heat resistant layer (HRL) may be provided on the surface of the separator 70.

The non-aqueous electrolyte typically contains a non-aqueous solvent and a supporting salt (in other words, an electrolyte salt). Examples of the non-aqueous solvent include carbonates (e.g., ethylene carbonate, ethyl methyl carbonate, dimethyl carbonate, etc.), esters, ethers, and the like. Examples of the supporting salt include lithium salts such as LiPF₆. The concentration of the supporting salt is not particularly limited, but is desirably 0.7 mol/L to 1.3 mol/L. The non-aqueous electrolyte may contain various additives such as a gas generating agent and a film forming agent. It should be noted that in the present embodiment, a non-aqueous electrolyte is used as the electrolyte, but the electrolyte may be a solid electrolyte.

The lithium-ion secondary battery 100 is used, for example, for vehicle-mounted applications (i.e., for driving power sources of vehicles such as electric vehicles (BEV), hybrid vehicles (HEV), plug-in hybrid vehicles (PHEV)), power source applications for electronic devices, and the like.

As described above, in the positive electrode of a lithium-ion secondary battery, Li, Ni, Co, and Mn are typically used as constituent metal elements of the positive electrode active material. Al is generally used for the positive electrode current collector. Cu is generally used for the negative electrode current collector. In addition, in the lithium-ion secondary battery, Li is used in the non-aqueous electrolyte. Further, Al may be used for the battery case.

Therefore, waste of lithium-ion secondary batteries may contain Ni, Co, and Mn mainly derived from lithium nickel cobalt manganese-based composite oxides of the positive electrode active material. Waste of lithium-ion secondary batteries may contain at least one of Ni, Co, and Mn derived from materials other than lithium nickel cobalt manganese-based composite oxides (e.g., materials of electrode terminals, etc.). Next, each step of the method for recovering metals of the present disclosure will be described.

### <Mn Leaching Step S101>

In the Mn leaching step S101, ammonia leaching of Mn is performed on an object containing Ni, Co, and Mn.

As described above, the object containing Ni, Co, and Mn may be a mineral containing Ni, Co, and Mn, battery waste containing Ni, Co, and Mn, or waste other than batteries containing Ni, Co, and Mn, and is desirably battery waste (particularly waste of lithium-ion secondary batteries). It should be noted that in the present specification, "battery waste" includes not only used batteries but also constituent members of used batteries, defective batteries, and constituent members of defective batteries. The waste may be one that has been subjected to some treatment (e.g., roasting treatment).

Specific examples of waste of lithium-ion secondary batteries include black mass of used lithium-ion secondary batteries (particularly, black mass obtained by crushing and roasting used lithium-ion secondary batteries), positive electrode waste taken out from used lithium-ion secondary batteries, electrode body waste taken out from used lithium-ion secondary batteries, waste of positive electrodes judged to be defective in manufacture, waste of electrode bodies judged to be defective in manufacture, and positive electrode active materials judged to be defective in manufacture.

In the object, Ni, Co, and Mn are contained, for example, in the form of metal, oxide, or the like. The oxide may be a composite oxide containing two or more kinds of metals. It is desirable that Ni and Co are contained as metals in the object. From this viewpoint, it is desirable that the object has been subjected to reductive roasting. Desirably, the object is black mass obtained by crushing and reductive-roasting used lithium-ion secondary batteries (also referred to as roasted black mass of lithium-ion secondary batteries). The roasted black mass typically contains Ni and Co as metals. In the roasted black mass, Mn is generally contained as an oxide, but Mn may be contained as a metal.

The roasted black mass can be obtained, for example, by crushing a lithium-ion secondary battery according to a known method, and performing sieving if necessary, and roasting at 400°C to 1500°C (desirably 700°C to 1000°C) in an atmosphere with an oxygen concentration of 5 vol% or less (desirably 1 vol% or less) (particularly, under an inert gas atmosphere such as argon gas or nitrogen gas) for 1 hour to 24 hours (desirably 4 hours to 12 hours). The roasted black mass may be one from which a specific metal species (e.g., Cu, etc.) has been removed by selection.

The object may further contain elements (particularly metal elements) other than Ni, Co, and Mn. For example, the object may further contain Li, Al, or the like in addition to Ni, Co, and Mn. The object may further contain transition metal elements other than Ni, Co, and Mn.

In the Mn leaching step S101, a first ammonia aqueous solution containing ammonia (NH₃) and ammonium carbonate ((NH₄)₂CO₃) is used as a leaching agent.

In the first ammonia aqueous solution, the concentration of ammonia is not particularly limited, but the higher the concentration, the higher the leaching ability. Therefore, the concentration of ammonia in the first ammonia aqueous solution is, for example, 1% by mass or more, desirably 5% by mass or more, more desirably 10% by mass or more, and still more desirably 15% by mass or more. Further, the upper limit of the concentration of ammonia is the saturated concentration of ammonia in water, and is therefore about 35% by mass. From the viewpoint of leaching ability and ease of handling, the concentration of ammonia is particularly desirably 15% by mass to 25% by mass.

Ammonium carbonate acts as a pH adjuster. Here, the pH of the first ammonia aqueous solution at 25°C is desirably 9 to 12, and more desirably 10 to 11. Therefore, the amount of ammonium carbonate in the first ammonia aqueous solution is desirably an amount such that the pH (25°C) of the first ammonia aqueous solution is 9 to 12, more desirably 10 to 11. The concentration of ammonium carbonate in the first ammonia aqueous solution is desirably 0.5 mol/L or more, more desirably 1 mol/L or more, and still more desirably 1.5 mol/L or more. On the other hand, the concentration of ammonium carbonate in the first ammonia aqueous solution may be 3 mol/L or less or 2.5 mol/L or less.

The first ammonia aqueous solution may contain only water, ammonia, and ammonium carbonate. The first ammonia aqueous solution may further contain components other than water, ammonia, and ammonium carbonate within a range (e.g., at a concentration of less than 10% by mass, 5% by mass or less, or 1% by mass or less) that does not impair the effects of the present disclosure.

The amount of the first ammonia aqueous solution used is not particularly limited, and may be about the same as the amount of ammonia aqueous solution used in known ammonia leaching methods. For example, the amount of the first ammonia aqueous solution used is an amount that completely immerses the object.

In the Mn leaching step S101, the amount of dissolved oxygen in the first ammonia aqueous solution (i.e., the first aqueous phase) in the leaching is less than the amount of dissolved oxygen in the second ammonia aqueous solution (i.e., the second aqueous phase) in the leaching in the Ni, Co leaching step S102. By having a small amount of dissolved oxygen in the first ammonia aqueous solution in the leaching in the Mn leaching step S101, Mn can be preferentially leached, and by having a large amount of dissolved oxygen in the second ammonia aqueous solution in the leaching in the Ni, Co leaching step S102, the leaching rate of Ni and Co can be increased.

From the viewpoint of making the amount of dissolved oxygen as described above, in the Mn leaching step S101, it is desirable to perform leaching in an atmosphere with an oxygen concentration of 21 vol% or less. The lower the oxygen concentration in the atmosphere, the higher the selectivity of Mn leaching. Therefore, the oxygen concentration of the atmosphere is desirably 18 vol% or less, more desirably 10 vol% or less, still more desirably 5 vol% or less, and particularly desirably 1 vol% or less (most desirably 0 vol%). Here, since the oxygen concentration in the air is about 21 vol%, for example, the leaching in the Mn leaching step S101 can be performed in a container or reaction tank that is open to the air. Alternatively, a gas with an oxygen concentration of 21 vol% or less may be supplied to the atmosphere (i.e., gas phase). At this time, the gas containing oxygen may be supplied into a sealed container and pressurization may be performed.

Advantageously, leaching is performed while supplying a gas with an oxygen concentration of 21 vol% or less to the first ammonia aqueous solution. By doing so, the amount of oxygen dissolved in the first ammonia aqueous solution (i.e., the aqueous phase) can be easily adjusted so that Mn is preferentially leached and Mn and Co do not precipitate. From the viewpoint of higher selectivity of Mn leaching, the oxygen concentration of the supplied gas is desirably 18 vol% or less, more desirably 10 vol% or less, still more desirably 5 vol% or less, and particularly desirably 1 vol% or less (most desirably 0 vol%).

It should be noted that since the oxygen concentration in the air is about 21 vol%, the above atmosphere and the supplied gas may be the air. Further, the oxygen concentration of the supplied gas can be adjusted according to a known method. For example, the oxygen concentration can be adjusted by mixing oxygen gas and an inert gas (e.g., nitrogen gas, argon gas, etc.) so as to obtain a predetermined oxygen concentration. Further, when only inert gas is used as the supplied gas, that is, when the supplied gas contains only inert gas (e.g., nitrogen gas, argon gas, etc.), the oxygen concentration can be made 1 vol% or less (particularly 0 vol%).

The supply of the gas with an oxygen concentration of 21 vol% or less to the first ammonia aqueous solution can be performed according to a known method. For example, it can be performed by supplying a gas with an oxygen concentration of 21 vol% or less to the first ammonia aqueous solution by bubbling. Here, when an inert gas is supplied to the first ammonia aqueous solution by bubbling, the selectivity of Mn leaching becomes extremely high.

It should be noted that the method for adjusting the amount of dissolved oxygen in the first ammonia aqueous solution in the leaching in the Mn leaching step S 101 is not limited to the above. For example, vacuum degassing may be performed on the first ammonia aqueous solution to reduce the amount of dissolved oxygen.

The Mn leaching step S101 can be performed, for example, as follows. First, a container is prepared. The container may be a known container used for ammonia leaching. If necessary, heating means such as a heater, temperature measuring means such as a thermometer or a temperature sensor, stirring means such as a stirring blade or a magnetic stirrer, and the like are attached to the container. Further, a bubbling device is prepared. The bubbling device may be a known one used in leaching. The bubbling device may be attached to the container before charging the object and the first ammonia aqueous solution, or may be attached to the container after charging the object and the first ammonia aqueous solution.

The object and the first ammonia aqueous solution are charged into the container. The order in which these are charged is not particularly limited, and either may be charged first, or they may be charged simultaneously. On the other hand, a gas with an oxygen concentration of 21 vol% or less is supplied as bubbles to the first ammonia aqueous solution by the bubbling device.

The amount of the gas with an oxygen concentration of 21 vol% or less supplied can be appropriately determined according to the amounts of the object and the first ammonia aqueous solution.

The Mn leaching step S101 may be performed at room temperature (i.e., 25+10°C) or under heating. The leaching temperature is desirably more than 0°C and 80°C or less, more desirably 10°C or more and 50°C or less, and still more desirably 15°C or more and 35°C or less.

The leaching time can be appropriately determined according to the leaching temperature. The higher the leaching temperature, the shorter the time required to complete leaching. The leaching time is, for example, 1 hour or more, desirably 2 hours or more, and more desirably 4 hours or more. On the other hand, from the viewpoint of operational efficiency, the leaching time is, for example, 48 hours or less, desirably 24 hours or less, and more desirably 10 hours or less.

It is desirable to perform stirring during leaching. The stirring speed is not particularly limited, but is desirably 200 rpm or more, more desirably 400 rpm or more, and still more desirably 500 rpm or more. The stirring speed may be 2000 rpm or less, 1000 rpm or less, or 800 rpm or less.

By performing ammonia leaching as described above, Mn can be preferentially leached into the aqueous phase (i.e., the first ammonia aqueous solution). That is, the Mn leaching step S101 can be performed. In the ammonia leaching in the Mn leaching step S101, by reducing the amount of dissolved oxygen in the first ammonia aqueous solution, precipitation of Mn and Co is suppressed, and Mn is selectively leached into the first aqueous phase. Ammonia leaching can be terminated by performing solid-liquid separation such as filtration. By this solid-liquid separation, a leachate (i.e., a first aqueous phase into which Mn has been leached) and a solid residue can be obtained. The leachate obtained in the Mn leaching step S101 contains Mn, and the solid residue contains Ni and Co.

Mn can be separated and recovered from the leachate according to a known method. The recovered Mn can be used for the production of positive electrode active materials. Alternatively, the recovered Mn can be used for other applications. Further, the leachate containing Mn may be used as it is for the production of positive electrode active materials. At this time, deterioration of output characteristics or the like due to contamination of the active material with a sulfuric acid source, which may occur in conventional production of positive electrode active materials, can be suppressed.

It should be noted that when the leachate containing Mn is stored in a state in which ammonia evaporates or in a state in which the oxygen concentration of the leachate becomes high, precipitation of Mn may occur. Therefore, it is desirable to store the leachate containing Mn under an environment in which the oxygen concentration is desirably 10 vol% or less, more desirably 5 vol% or less, still more desirably 2 vol% or less, and most desirably 0%. Further, it is desirable to store the leachate containing Mn in a sealed state. In one desired embodiment, the leachate containing Mn is stored in a sealed container filled with an inert gas (e.g., nitrogen gas, argon gas).

### <Ni, Co Leaching Step S102>

In the Ni, Co leaching step S102, ammonia leaching of Ni and Co is performed on the solid residue obtained in the Mn leaching step S101.

In the Ni, Co leaching step S102, a second ammonia aqueous solution containing ammonia (NH₃) and ammonium carbonate ((NH₄)₂CO₃) is used as a leaching agent.

In the second ammonia aqueous solution, the concentration of ammonia is not particularly limited, but the higher the concentration, the higher the leaching ability. Therefore, the concentration of ammonia in the second ammonia aqueous solution is, for example, 1% by mass or more, desirably 5% by mass or more, more desirably 10% by mass or more, and still more desirably 15% by mass or more. Further, the upper limit of the concentration of ammonia is the saturated concentration of ammonia in water, and is therefore about 35% by mass. From the viewpoint of leaching ability and ease of handling, the concentration of ammonia is particularly desirably 15% by mass to 25% by mass.

Ammonium carbonate acts as a pH adjuster. Here, the pH of the second ammonia aqueous solution at 25°C is desirably 9 to 12, and more desirably 10 to 11. Therefore, the amount of ammonium carbonate in the second ammonia aqueous solution is desirably an amount such that the pH (25°C) of the second ammonia aqueous solution is 9 to 12, more desirably 10 to 11. The concentration of ammonium carbonate in the second ammonia aqueous solution is desirably 0.5 mol/L or more, more desirably 1 mol/L or more, and still more desirably 1.5 mol/L or more. On the other hand, the concentration of ammonium carbonate in the second ammonia aqueous solution may be 3 mol/L or less or 2.5 mol/L or less.

The second ammonia aqueous solution may contain only water, ammonia, and ammonium carbonate. The second ammonia aqueous solution may further contain components other than water, ammonia, and ammonium carbonate within a range (e.g., at a concentration of less than 10% by mass, 5% by mass or less, or 1% by mass or less) that does not impair the effects of the present disclosure.

As the second ammonia aqueous solution, one having the same composition (i.e., the same components and concentrations) as the first ammonia aqueous solution may be used, or one having a different composition may be used. From the viewpoint of ease of management when carrying out the method, it is desirable that the composition of the second ammonia aqueous solution is the same as the composition of the first ammonia aqueous solution.

The amount of the second ammonia aqueous solution used is not particularly limited, and may be about the same as the amount of ammonia aqueous solution used in known ammonia leaching methods. For example, the amount of the second ammonia aqueous solution used is an amount that completely immerses the solid residue.

In the Ni, Co leaching step S102, the amount of dissolved oxygen in the second ammonia aqueous solution (i.e., the second aqueous phase) in the leaching is greater than the amount of dissolved oxygen in the first ammonia aqueous solution (i.e., the first aqueous phase) in the leaching in the Mn leaching step S101. By having a large amount of dissolved oxygen in the second ammonia aqueous solution in the leaching in the Ni, Co leaching step S102, the leaching rate of Ni and Co can be increased.

From the viewpoint of making the amount of dissolved oxygen as described above, in the Ni, Co leaching step S102, it is desirable to perform leaching in an atmosphere with an oxygen concentration of 50 vol% or more. The higher the oxygen concentration in the atmosphere, the higher the leaching rate of Ni and Co. Therefore, the oxygen concentration of the atmosphere is desirably 60 vol% or more, more desirably 75 vol% or more, still more desirably 90 vol% or more, and particularly desirably 99 vol% or more (most desirably 100 vol%).

The leaching may be performed while supplying a gas with an oxygen concentration of 50 vol% or more to the atmosphere (i.e., gas phase). At this time, the gas containing oxygen may be supplied into a sealed container and pressurization may be performed.

Advantageously, in the Ni, Co leaching step S102, leaching is performed while supplying a gas with an oxygen concentration of 50 vol% or more to the second ammonia aqueous solution. By doing so, the amount of oxygen dissolved in the second ammonia aqueous solution can be easily adjusted so that Ni and Co are leached at a high rate. From the viewpoint of a higher leaching rate of Ni and Co, the oxygen concentration of the supplied gas is desirably 60 vol% or more, more desirably 75 vol% or more, still more desirably 90 vol% or more, and particularly desirably 99 vol% or more (most desirably 100 vol%).

The oxygen concentration of the supplied gas can be adjusted according to a known method. For example, the oxygen concentration can be adjusted by mixing oxygen gas and an inert gas (e.g., nitrogen gas, argon gas, etc.) so as to obtain a predetermined oxygen concentration. Further, when only oxygen gas is used as the supplied gas, that is, when the supplied gas contains only oxygen gas, the oxygen concentration can be made 99 vol% or more (particularly 100 vol%).

The supply of the gas with an oxygen concentration of 50 vol% or more to the second ammonia aqueous solution can be performed according to a known method. For example, it can be performed by supplying a gas with an oxygen concentration of 50 vol% or more to the second ammonia aqueous solution by bubbling. Here, when only oxygen gas is supplied to the second ammonia aqueous solution by bubbling, the leaching rate and selectivity of Ni and Co become extremely high. At this time, the smaller the bubbles, the more efficiently the amount of dissolved oxygen can be increased. Alternatively, for example, the supply of a gas with an oxygen concentration of 50 vol% or more to the second ammonia aqueous solution can be performed by sealing a container and supplying a gas with an oxygen concentration of 50 vol% or more therein while pressurizing.

It should be noted that the method for adjusting the amount of dissolved oxygen in the second ammonia aqueous solution in the leaching in the Ni, Co leaching step S102 is not limited to the above.

The Ni, Co leaching step S102 can be performed, for example, as follows. First, a container is prepared. The container may be a known container used for ammonia leaching. If necessary, heating means such as a heater, temperature measuring means such as a thermometer or a temperature sensor, stirring means such as a stirring blade or a magnetic stirrer, and the like are attached to the container. Further, a bubbling device is prepared. The bubbling device may be a known one used in leaching. The bubbling device may be attached to the container before charging the solid residue and the second ammonia aqueous solution, or may be attached to the container after charging the solid residue and the second ammonia aqueous solution.

The solid residue and the second ammonia aqueous solution are charged into the container. The order in which these are charged is not particularly limited, and either may be charged first, or they may be charged simultaneously. On the other hand, a gas with an oxygen concentration of 50 vol% or more is supplied as bubbles to the second ammonia aqueous solution by the bubbling device.

The amount of the gas with an oxygen concentration of 50 vol% or more supplied can be appropriately determined according to the amounts of the solid residue and the second ammonia aqueous solution. Regarding the amount of gas supplied, the amount of oxygen supplied is desirably equimolar or more, more desirably 2 molar times or more, and still more desirably 3 molar times or more with respect to the element that may be oxidized contained in the solid residue (particularly, Ni and Co). The amount of oxygen supplied may be 100 molar times or less with respect to the element that may be oxidized contained in the solid residue.

The Ni, Co leaching step S102 may be performed at room temperature (i.e., 25±10°C) or under heating. The leaching temperature is desirably more than 0°C and 80°C or less, more desirably 10°C or more and 50°C or less, and still more desirably 15°C or more and 35°C or less.

The leaching time can be appropriately determined according to the leaching temperature. The higher the leaching temperature, the shorter the time required to complete leaching. The leaching time is, for example, 1 hour or more, desirably 2 hours or more, and more desirably 4 hours or more. On the other hand, from the viewpoint of operational efficiency, the leaching time is, for example, 48 hours or less, desirably 24 hours or less, and more desirably 10 hours or less.

It is desirable to perform stirring during leaching. The stirring speed is not particularly limited, but is desirably 200 rpm or more, more desirably 400 rpm or more, and still more desirably 500 rpm or more. The stirring speed may be 2000 rpm or less, 1000 rpm or less, or 800 rpm or less.

As described above, by performing ammonia leaching, Ni and Co can be preferentially leached into the second aqueous phase (i.e., the second ammonia aqueous solution). That is, the Ni, Co leaching step S102 can be performed. In the ammonia leaching in the Ni, Co leaching step S102, by increasing the amount of dissolved oxygen in the second ammonia aqueous solution, Ni and Co are selectively leached into the second aqueous phase. Ammonia leaching can be terminated by performing solid-liquid separation such as filtration. By this solid-liquid separation, a leachate (i.e., a second aqueous phase into which Ni and Co have been leached) and a solid residue can be obtained. The leachate obtained in the Ni, Co leaching step S102 contains Ni and Co.

Ni and Co can be separated and recovered from the leachate according to a known method. The recovered Ni and Co can be used for the production of positive electrode active materials. Alternatively, the recovered Ni and Co can be used for other applications. Further, the leachate containing Ni and Co may be used as it is for the production of positive electrode active materials. At this time, deterioration of output characteristics or the like due to contamination of the active material with a sulfuric acid source, which may occur in conventional production of positive electrode active materials, can be suppressed.

As described above, according to the method for recovering metals of the present disclosure, by two-stage ammonia leaching in which the oxygen concentration of the gas supplied to the aqueous phase is changed, Co and Mn can be recovered at a high recovery rate from an object containing Ni, Co, and Mn, and the recovery rate of Ni is also high. Ni, Co, and Mn can be used for various applications according to known methods. The method for recovering metals of the present disclosure is easy to carry out and is useful in the field of metal extraction. In addition, according to the method for recovering metals of the present disclosure, Ni, Co, and Mn can be recovered from battery waste containing Ni, Co, and Mn and reused for the production of positive electrode active materials. Therefore, the method for recovering metals of the present disclosure is useful in metal recycling, and is extremely useful particularly in material recycling of lithium-ion secondary batteries.

Hereinafter, Examples relating to the present disclosure will be described in detail, but it is not intended to limit the present disclosure to those shown in such Examples.

### [Examples 1 to 2 and Comparative Examples 1 to 7]

First, a roasted black mass of a leaching sample was prepared by the following procedure. A positive electrode having a positive electrode active material layer containing a lithium nickel cobalt manganese composite oxide (LiNi_{0.6}Co_{0.2}Mn_{0.2}O₂) on aluminum (Al) foil was crushed. The crushed product of the positive electrode was passed through a sieve with an opening of 500 µm to produce a positive electrode powder. Further, a negative electrode having a negative electrode active material layer containing graphite on copper foil was crushed. The crushed product of the negative electrode was passed through a sieve with an opening of 500 µm to produce a negative electrode powder. The obtained positive electrode powder and negative electrode powder were mixed to obtain a black mass. The black mass was roasted at 750°C for 6 hours under a low oxygen atmosphere to obtain a roasted black mass in which most of the metals were reduced. 1 g of this roasted black mass was dissolved in an acid, and high-frequency inductively coupled plasma (ICP) emission spectroscopic analysis was performed on the resulting solution. From the analysis results, the amounts of Co and Mn in the roasted black mass were determined.

An ammonia aqueous solution was prepared by dissolving ammonium carbonate at 1.5 molar times the total molar amount of Ni and Co in the roasted black mass into ammonia water having a concentration of 13 mol/L (about 25% by mass).

The first stage ammonia leaching was performed as follows. The roasted black mass was charged into the above ammonia aqueous solution. Ammonia leaching was performed at room temperature (25°C) for 6 hours under stirring at 800 rpm while supplying the gas shown in Table 1 to the ammonia aqueous solution by bubbling. Thereafter, solid-liquid separation was performed by filtration to obtain a leachate (1) and a solid residue (1).

Subsequently, the second stage ammonia leaching was performed as follows. The obtained solid residue (1) was charged into the above ammonia aqueous solution. Ammonia leaching was performed at room temperature (25°C) for 6 hours under stirring at 800 rpm while supplying the gas shown in Table 1 to the ammonia aqueous solution by bubbling. Thereafter, solid-liquid separation was performed by filtration to obtain a leachate (2) and a solid residue (2).

### [Evaluation of Leaching Rate]

ICP emission spectroscopic analysis was performed on the leachate (1) and the leachate (2) obtained in each Example and each Comparative Example, and the amounts of Co and Mn in the leachate (1) and the amounts of Co and Mn in the leachate (2) were determined. Using the determined values and the values of the initial amounts in the roasted black mass described above, the Co leaching rates and the Mn leaching rates in the first stage ammonia leaching and the second stage ammonia leaching were determined. Further, the sum of the Co leaching rates in the first stage and the second stage was taken as the Co recovery rate, and the sum of the Mn leaching rates in the first stage and the second stage was taken as the Mn recovery rate. The results are shown in Table 1.

### [Table 1]

**Table 1**

| | First stage | | | Second stage | | | Co recovery rate (%) | Mn recovery rate (%) |
|---|---|---|---|---|---|---|---|---|
| | Bubbling Gas | Co leaching rate (%) | Mn leaching rate (%) | Bubbling Gas | Co leaching rate (%) | Mn leaching rate (%) | | |
| Comparative Example 1 | Oxygen | 70 | 0 | Oxygen | 7 | 0 | 77 | 0 |
| Comparative Example 2 | Oxygen | 70 | 0 | Air | 6 | 55 | 76 | 55 |
| Comparative Example 3 | Oxygen | 70 | 0 | Nitrogen | 4 | 60 | 74 | 60 |
| Example 1 | Air | 14 | 90 | Oxygen | 82 | 0 | 96 | 90 |
| Comparative Example 4 | Air | 14 | 90 | Air | 15 | 5 | 29 | 95 |
| Comparative Example 5 | Air | 14 | 90 | Nitrogen | 0 | 3 | 14 | 93 |
| Example 2 | Nitrogen | 1 | 96 | Oxygen | 99 | 0 | 100 | 96 |
| Comparative Example 6 | Nitrogen | 1 | 96 | Air | 14 | 1 | 15 | 97 |
| Comparative Example 7 | Nitrogen | 1 | 96 | Nitrogen | 1 | 2 | 2 | 98 |

As shown by the results in Table 1, when the first stage ammonia leaching was performed while supplying oxygen gas, Co was preferentially leached. On the other hand, Mn precipitated. As a result, both the recovery rates of Co and Mn were insufficient. When the first stage ammonia leaching was performed while supplying air or nitrogen gas, Mn could be preferentially leached in the first stage ammonia leaching. Then, when the second stage ammonia leaching was performed while supplying oxygen gas, Co could be preferentially leached. From these results, it can be seen that the selectivity of leaching can be controlled according to the oxygen concentration of the gas supplied to the aqueous phase.

Then, in Examples 1 and 2, in which the oxygen concentration of the gas supplied in the first stage ammonia leaching was equal to or less than the oxygen concentration in the air and the oxygen concentration of the gas supplied in the second stage ammonia leaching was increased, both the Co recovery rate and the Mn recovery rate were 90% or more.

From the above, it can be seen that according to the method for recovering metals of the present disclosure, Co and Mn can be recovered at a high recovery rate from an object containing Ni, Co, and Mn using ammonia and ammonium carbonate.

Although specific examples of the present disclosure have been described in detail above, these are merely examples and do not limit the scope of claims. The technology described in the scope of claims includes various modifications and changes of the specific examples illustrated above.

That is, the method for recovering metals of the present disclosure is the following items [1] to [9].
[1] A method for recovering metals, including: an Mn leaching step of performing leaching on an object containing Ni, Co, and Mn using a first ammonia aqueous solution containing ammonia and ammonium carbonate to leach Mn into a first aqueous phase, and
   a Ni, Co leaching step of performing leaching on a solid residue obtained in the Mn leaching step using a second ammonia aqueous solution containing ammonia and ammonium carbonate to leach Ni and Co into a second aqueous phase,
   wherein the amount of dissolved oxygen in the first ammonia aqueous solution in the leaching in the Mn leaching step is less than the amount of dissolved oxygen in the second ammonia aqueous solution in the leaching in the Ni, Co leaching step.
[2] The method according to item [1], wherein in the Mn leaching step, the leaching is performed while supplying a gas with an oxygen concentration of 21 vol% or less to the first ammonia aqueous solution, and
   in the Ni, Co leaching step, the leaching is performed while supplying a gas with an oxygen concentration of 50 vol% or more to the second ammonia aqueous solution.
[3] The method according to item [1], wherein in the Mn leaching step, the leaching is performed while supplying a gas with an oxygen concentration of 10 vol% or less to the first ammonia aqueous solution, and
   in the Ni, Co leaching step, the leaching is performed while supplying a gas with an oxygen concentration of 90 vol% or more to the second ammonia aqueous solution.
[4] The method according to item [1], wherein in the Mn leaching step, the leaching is performed while supplying nitrogen gas to the first ammonia aqueous solution, and
   in the Ni, Co leaching step, the leaching is performed while supplying oxygen gas to the second ammonia aqueous solution.
[5] The method according to any one of items [1] to [4], wherein the object contains Ni and Co as metals.
[6] The method according to any one of items [1] to [5], wherein the object is waste of lithium-ion secondary batteries.
[7] The method according to item [6], wherein the waste is roasted black mass of lithium-ion secondary batteries.
[8] The method according to any one of items [1] to [7], wherein the ammonia concentration of the first ammonia aqueous solution and the ammonia concentration of the second ammonia aqueous solution are within a range of 15% by mass to 25% by mass.
[9] The method according to any one of items [1] to [8], wherein the pH of the first ammonia aqueous solution at 25°C and the pH of the second ammonia aqueous solution at 25°C are within a range of 9 to 12.

## Claims

1. A method for recovering metals, comprising: an Mn leaching step (S101) of performing leaching on an object containing Ni, Co, and Mn using a first ammonia aqueous solution containing ammonia and ammonium carbonate to leach Mn into a first aqueous phase, and
a Ni, Co leaching step (S102) of performing leaching on a solid residue obtained in the Mn leaching step (S101) using a second ammonia aqueous solution containing ammonia and ammonium carbonate to leach Ni and Co into a second aqueous phase,
wherein the amount of dissolved oxygen in the first ammonia aqueous solution in the leaching in the Mn leaching step (S101) is less than the amount of dissolved oxygen in the second ammonia aqueous solution in the leaching in the Ni, Co leaching step (S102).

2. The method according to claim 1, wherein in the Mn leaching step (S101), the leaching is performed while supplying a gas with an oxygen concentration of 21 vol% or less to the first ammonia aqueous solution, and
in the Ni, Co leaching step (S102), the leaching is performed while supplying a gas with an oxygen concentration of 50 vol% or more to the second ammonia aqueous solution.

3. The method according to claim 1, wherein in the Mn leaching step (S101), the leaching is performed while supplying a gas with an oxygen concentration of 10 vol% or less to the first ammonia aqueous solution, and
in the Ni, Co leaching step (S102), the leaching is performed while supplying a gas with an oxygen concentration of 90 vol% or more to the second ammonia aqueous solution.

4. The method according to claim 1, wherein in the Mn leaching step (S101), the leaching is performed while supplying nitrogen gas to the first ammonia aqueous solution, and
in the Ni, Co leaching step (S102), the leaching is performed while supplying oxygen gas to the second ammonia aqueous solution.

5. The method according to claim 1, wherein the object contains Ni and Co as metals.

6. The method according to claim 1, wherein the object is waste of lithium-ion secondary batteries (100).

7. The method according to claim 6, wherein the waste is roasted black mass of lithium-ion secondary batteries (100).

8. The method according to claim 1, wherein the ammonia concentration of the first ammonia aqueous solution and the ammonia concentration of the second ammonia aqueous solution are within a range of 15% by mass to 25% by mass.

9. The method according to claim 1, wherein the pH of the first ammonia aqueous solution at 25°C and the pH of the second ammonia aqueous solution at 25°C are within a range of 9 to 12.
